# FASCICULE DE BREVET EUROPEEN

(11) **EP 2 094 366 B1**
(45) Date de publication et mention de la délivrance du brevet: **06.06.2012**
(21) Numéro de dépôt: 07866470.3
(22) Date de dépôt: 30.10.2007
(51) Int. Cl.: B01D 15/36, A23C 9/146

(54) **PROCEDE DE PURIFICATION DE SIALYLLACTOSE PAR CHROMATOGRAPHIE**
VERFAHREN ZUR REINIGUNG VON SIALYLLACTOSE MITTELS CHROMATOGRAPHIE
METHOD FOR PURIFYING SIALYLLACTOSE BY MEANS OF CHROMATOGRAPHY

(30) Priorité: 30.10.2006 FR 0609528
(43) Date de publication de la demande: 02.09.2009
(73) Titulaire: APPLEXION, 78680 Epone (FR)
(72) Inventeur: BAUDOUIN, Stanislas, 78410 Aubergenville (FR)
(74) Mandataire: Hirsch & Associés
(86) Numéro de dépôt international: PCT/FR2007/001801
(87) Numéro de publication internationale: WO 2008/053102

(56) Documents cités:
- EP-A- 0 053 027
- EP-A1- 0 226 035
- FR-A1- 2 226 116
- FR-A1- 2 443 867
- FR-A1- 2 671 696
- US-A- 5 118 516

## Description

### DOMAINE DE L'INVENTION

La présente invention a pour objet un procédé de purification de sialyllactose par chromatographie d'une solution contenant le sialyllactose sur un lit fixe de résine spécifique.

### ETAT DE LA TECHNIQUE

Le sialyllactose a un rôle de lutte contre les bactéries pathogènes ; il permet de réduire les risques d'infections. Une étude récente a par ailleurs démontré que le sialyllactose réduit le risque de contamination par le HIV.

Le sialyllactose est formé par association entre l'acide sialique et le lactose. Ce composé de formule brute C₂₃H₃₉NO₁₉ (MW 633) est représenté par la formule suivante (le sialyllactose présente une fonction acide carboxylique) :

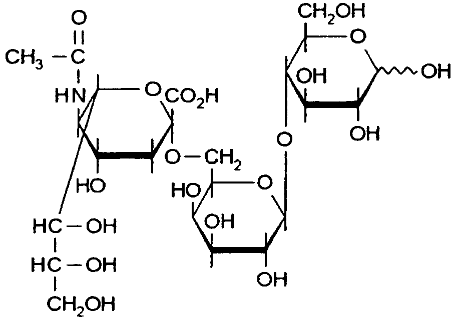

Sa concentration dans le lait est donnée à titre indicatif dans le tableau ci-dessous.

| Lait | colostrum | Lait | Lait longue lactation |
|---|---|---|---|
| Humain | 1018+/229 | 365+/-245 | Nd |
| bovin | 231+/75 | 33+/-8 | 54 +/- 18 |

Le lait humain contient donc beaucoup plus de sialyllactose que le lait bovin. Les laits infantiles produits à partir de lait bovin sont donc beaucoup moins riches que le lait humain et donc ne protègent pas aussi efficacement contre les bactéries pathogènes que le lait maternel. Ainsi, il serait utile de pouvoir compléter un lait infantile avec du syalyllactose, et pour ce faire il serait intéressant de disposer d'une source de sialyllactose.

La séparation entre le lactose et le sialyllactose a été réalisée sur du lactosérum après délipidation, à l'aide d'une séparation par tamis moléculaire avec de la résine Sephadex G50. Cette séparation est certes efficace mais l'adsorbant utilisé est cher et plutôt adapté à un usage de recherche au laboratoire plutôt qu'à une séparation à l'échelle industrielle.

La demande de brevet EP 226 035 concerne un procédé de séparation chromatographique du lactose à partir du lait. Son but est de fractionner le lait sur une résine échangeuse de cations, en une fraction riche en lactose et une fraction pauvre en lactose et riche en protéines et en graisses. Cependant cette demande antérieure ne mentionne pas la séparation ou la récupération du sialyllactose.

La demande française 2 671 696 mentionne le sialyllactose et s'intéresse plus particulièrement à la fabrication d'une composition à teneur élevée en acides sialiques, à partir du petit lait. Ces acides sialiques comprennent le sialyllactose et d'autres formes sialiques, tels que le glycomacropeptide de κ-caséine (GMP) ou les gangliosides. Le GMP est le composé principal récupéré. Le procédé consiste dans une adsorption des protéines sur des résines cationiques utilisées classiquement pour la purification des protéines.

La demande US2004/0185146 décrit un procédé qui consiste à déminéraliser le lactosérum et à récupérer le sialyllactose sur une résine anionique, après décationisation sur une résine cationique. Ce procédé implique une consommation élevée de réactif, car le lactosérum est totalement déminéralisé par le procédé.

Ainsi, il existe un besoin d'un procédé de purification de sialyllactose utilisable à l'échelle industrielle qui donne de bons rendements.

### RESUME DE L'INVENTION.

Il a maintenant été mis en évidence que l'utilisation d'une résine particulière dans un procédé de séparation par chromatographie permet la séparation efficace de sialyllactose.

L'invention fournit donc un procédé de purification de sialyllactose par chromatographie d'exclusion ionique d'une solution contenant le sialyllactose sur une résine cationique forte sous forme majoritaire monovalente, Na ou K, et obtention d'un raffinat enrichi en sialyllactose, le procédé comprenant une étape préalable de séparation de tout ou partie du phosphate de calcium.

Selon un mode de réalisation, la résine est une résine du type polystyrène divinylbenzène sulfonée.

Selon un mode de réalisation, la température est comprise entre 0 et 80°C.

Selon un mode de réalisation, le procédé comprend une étape préalable de substitution des ions divalents par des ions monovalents, en particulier substitution des ions calcium par des ions sodium ou potassium.

Selon un mode de réalisation, le procédé comprend une étape préalable de nanofiltration.

Selon un mode de réalisation, le procédé comprend une étape ultérieure de concentration du raffinat ainsi obtenu.

Selon un mode de réalisation, la solution contenant le sialyllactose est du lactosérum, du perméat de lactosérum, du lait, des eaux-mères de cristallisation de lactose.

Selon un mode de réalisation, le procédé comprend une étape préalable de séparation des protéines de la solution contenant le sialyllactose, notamment par ultrafiltration.

Selon un mode de réalisation, le procédé est mis en oeuvre de façon continue multi-colonnes.

Selon un mode de réalisation, le procédé comprend une étape de substitution des ions divalents par des ions monovalents puis une étape de concentration par nanofiltration, l'étape de chromatographie d'exclusion ionique et une étape de concentration sur membranes du raffinat.

L'invention a aussi pour objet un procédé d'enrichissement de laits maternisés par adjonction de sialyllactose comprenant la production de sialyllactose par le procédé selon l'invention et l'ajout du sialyllactose ainsi obtenu à un lait maternisé ou un précurseur de ce lait maternisé. L'invention vise donc aussi les laits maternisés obtenus par adjonction de sialyllactose obtenu par le procédé.

L'invention a encore pour objet un dispositif pour la purification du sialyllactose comprenant au moins une unité de décalcification, au moins une unité de nanofiltration et au moins un unité chromatographie, pour la mise en oeuvre du procédé selon l'invention.

### BREVE DESCRIPTION DES FIGURES.

- La figure 1 représente un profil d'élution dans une colonne remplie avec une résine cationique forte ;
- La figure 2 représente un profil de concentration interne dans les colonnes d'une installation mettant en oeuvre le procédé selon l'invention ;
- La figure 3 représente schématiquement un mode de réalisation de l'invention.

### EXPOSE DETAILLE DE MODES DE REALISATION DE L'INVENTION.

L'invention s'applique de façon générale à toutes les fractions du lait contenant le sialyllactose, en particulier le lactosérum. De même, l'invention permet la séparation des sialyloligosaccharides, en particulier le sialyllactose.

En général, le lactosérum se présente sous deux grandes catégories :
- Lactosérum doux. Egalement appelé lactosérum de fromagerie, il est produit au cours de l'élaboration des fromages obtenus au moyen de présure. Le pH des lactosérums doux peut varier typiquement de 5,2 à 6,7.
- Lactosérum acide. Il s'agit de sous produits de l'élaboration de caséine, de caillebotte ou de fromage frais. Le lactosérum de caséine provient de la fabrication par coagulation par l'acide lactique ou l'acide chlorhydrique. La fermentation naturelle produit de l'acide lactique confère une acidité élevée au lactosérum. Le pH de cette gamme de produit va typiquement de 3,8 à 4,6.

L'invention s'applique aux deux types de lactosérum décrits ci-dessus et de façon générale aux produits laitiers qui sont des solutions contenant des sialyloligosaccharides, en particulier le sialyllactose. Des exemples de telles solutions sont le lactosérum issu de fromagerie, le perméat de lactosérum, le lait, les eaux-mères de cristallisation de lactose.

Le procédé est basé sur la découverte que le sialyllactose peut être purifié de façon notable par chromatographie d'exclusion d'ions en utilisant une résine cationique polystyrène divinylbenzène sulfonée. Le sialyllactose est séparé du lactose qui est le constituant majoritaire (80 %) du lactosérum et se retrouve avec les molécules ionisées et les macromolécules présentes dans le lactosérum. En éliminant le lactose, la pureté du sialyllactose peut être multipliée par 5.

Le principe de la séparation est basé sur deux phénomènes chromatographiques complémentaires, qui sont réalisés sensiblement simultanément sur la résine:
- de par sa matrice polystyrene divinylbenzene, la résine adsorbe les molécules présentant une masse molaire faible comme le lactose mais exclue les masses molaires élevées comme le sialyllactose. Il y a donc un effet d'exclusion de taille (size exclusion chromatography) ;
- de par sa ionisation, la résine exclue les molécules ionisées, tel que le sialyllactose, dont la fonction acide est dissociée au pH du lactosérum. Il y a donc un effet d'exclusion ionique (ion exclusion chromatography). Le procédé est mis en oeuvre, la résine étant majoritairement sous forme monovalente, Na ou K.

La combinaison de deux effets chromatographiques permet une bonne efficacité de purification, sans utilisation de réactif pour la régénération de l'adsorbant, en utilisant un adsorbant très bon marché et compatible avec un usage alimentaire du sialyllactose.

L'invention permet donc la séparation de lactosérum en sensiblement deux fractions, la première fraction contenant le lactose et la seconde fraction contenant le sialyllactose, les molécules ionisées et des macromolécules.

La résine utilisée est une résine polystyrène divinylbenzène sulfonée. Toute résine polystyrènique gel, réticulée avec du divynilbenzène, peut être utilisée. Le taux de divynilbenzène (DVB) sera typiquement compris entre 2 et 16 %, préférentiellement entre 4 et 8 % et plus préférentiellement entre 5 et 6 %.

La résine est une résine échangeuse de cations forts, utilisée en élution sous forme ionisée, Le cation peut être Na ou K. La résine cationique forte est sous forme majoritaire monovalente, c'est-à-dire que plus de 50 % de la capacité totale de la résine est sous forme ionisée, Na ou K, par exemple plus de 70%, notamment plus de 90%.

Des exemples de résines sont les suivantes : Diaion UBK 550, Diaion UBK530, Dowex 99/310, 99/320, 99/350, Lanxess M DS 1368, Rohm&Haas CR 1320, Rohm&Haas CR 1310.

La chromatographie selon l'invention peut être continue, discontinue (batch) ou séquentielle (notamment connue sous le nom de SSMB). L'invention peut être mise en oeuvre sur une seule colonne, ou dans un dispositif multi-colonnes, les dispositifs multi-colonnes étant préférés ici.

La technologie de SMB (Simulated Moving Bed) est connue depuis longtemps, et est l'objet notamment des brevets suivants US 2957927, US 2985589, US 3205166, US 3291726 et US 3310486 (UOP). Des colonnes avec des longueurs chromatographiques variables peuvent aussi être utilisées dans l'invention. Ainsi, on peut mettre en oeuvre l'invention dans un système dit Varicol^{®}, développé par la demanderesse, et correspondant aux brevets US 6136198, US 6375839, US 6712973, US 6413419 et WO 00/25885. On peut aussi mettre en oeuvre l'invention dans un système dit Cyclojet^{®}, lui aussi développé par la demanderesse, et correspondant aux brevets US 5630943 et WO 97/20206, ainsi que US 6063284 et WO 98/51391.

Tout autre procédé chromatographique, incluant la chromatographie batch, qu'il soit multi-colonnes ou non, peut être utilisé ; on pourra citer les systèmes connus sous les noms de ModiCon^{®} et PowerFeed^{®}, ainsi que la chromatographie SMB deux zones.

L'éluant utilisé dans les procédés est tout éluant susceptible d'être utilisé en alimentaire ; notamment il s'agit d'eau.

Le pH auquel est mis en oeuvre le procédé varie dans l'intervalle des pH de 0 à 12, préférentiellement, il est compris entre 5 et 7. La température à laquelle on met en oeuvre le procédé peut être comprise entre 0°C et 80°C, notamment par exemple à environ la température ambiante. La pression est telle que l'on opère en général en phase liquide.

Le sialyllactose est efficacement séparé par chromatographie (avantageusement continue) du lactose. Cependant, la forte concentration de phosphate de calcium dans le lactosérum peut présenter un risque de précipitation dans le séparateur. Ainsi, selon le cas, l'invention implique une étape préalable de prétraitement du lactosérum pour enlever tout ou partie du phosphate de calcium dans le lactosérum. Notamment, on peut échanger les ions divalents en ions monovalents, et ainsi il est possible d'augmenter la teneur en sialyllactose dans le perméat entier.

A titre d'exemple de prétraitement, on peut citer les procédés objet des demandes WO 99/04903 et WO 2004/022787, WO 2004/022788 et WO 2004/022789. Notamment, l'étape d'échange ou substitution du phosphate de calcium fait emploi d'une résine cationique dont le contre-ion est un cation métallique monovalent, comme le sodium ou le potassium par exemple. On peut aussi procéder, avant ou après la substitution des cations, à une substitution des anions bivalents en anions monovalents (par ex chlorure), dans des conditions décrites dans les demandes ci-dessus.

On peut encore procéder à une concentration par nanofiltration sur membranes, pour éliminer les sels monovalents et concentrer les carbohydrates. Les différents flux peuvent être traités pour être recyclés dans le procédé.

Le raffinat contenant le sialyllactose qui est obtenu par le procédé selon l'invention peut être concentré selon des techniques classiques, par exemple par clarification par membranes, filtre à pré-couche, nanofiltration, etc.

On peut procéder à l'échange ionique décrit ci-dessus sur le raffinat obtenu par le procédé selon l'invention.

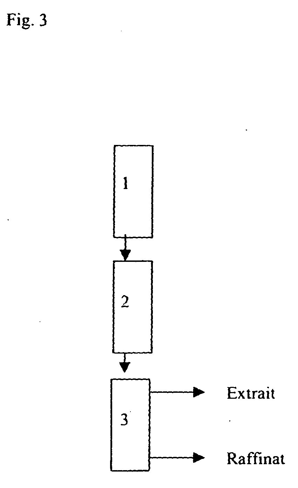

La figure 3 représente une installation faisant emploi de la technique préalable de substitution des cations divalents par des cations monovalents, en particulier de la substitution du phosphate de calcium par du phosphate de sodium ou de potassium. L'installation comprend alors une unité 1 d'échange des ions divalents en ions monovalents, chlorure et sodium ou potassium. Le flux est traité par nanofiltration sur membranes dans l'unité 2. Le flux sortant est envoyé vers la séparation chromatographique 3. Cette unité 3 comprend par exemple 6 colonnes. On obtient un extrait et un raffinat.

Enfin, l'invention a pour objet l'application du procédé de préparation de sialyllactose pour son usage dans un lait maternisé. Des laits maternisés sont décrits notamment dans le document EP-A-0302807.

Les exemples suivants illustrent l'invention sans la limiter.

### EXEMPLES

### Exemple 1. Chromatographie d'élution.

On utilise une colonne de 2,5 cm de diamètre et 100 cm de long est remplie de résine Diaion UBK 530 au préalable équilibrée avec du lactosérum. La température est maintenue à 60°C par un bain marie. Le débit de circulation est de 600 ml/h.

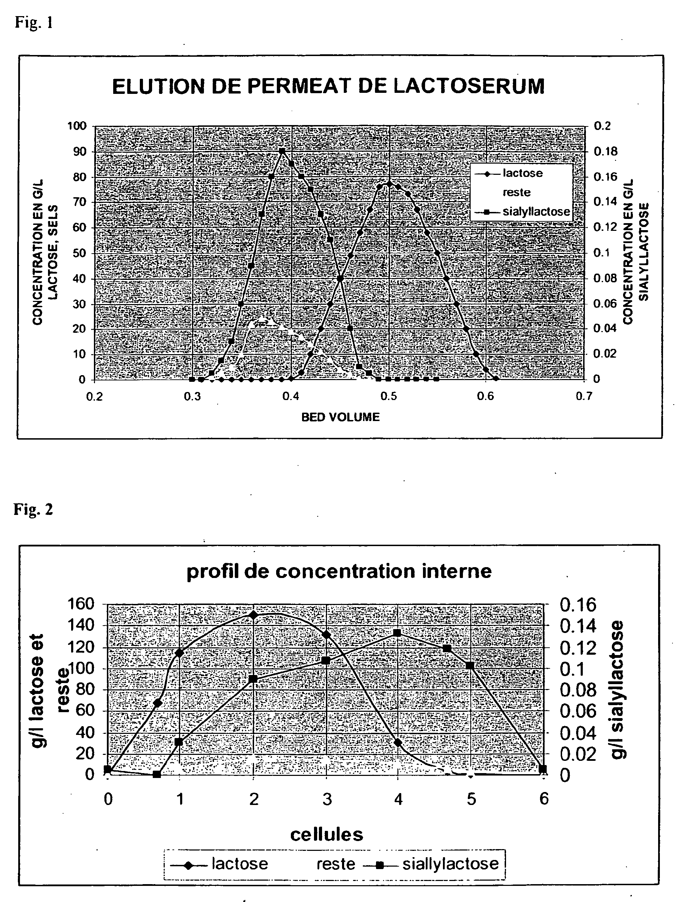

20 ml de perméat de lactosérum sont introduits dans la colonne puis élués par de l'eau. La concentration en sialyllactose dans le perméat de lactosérum est d'environ 150 mg/l. L'effluent de la colonne est fractionné et le lactose, le sialyllactose et la matière sèche totale sont analysés. La courbe d'élution est donnée à la figure 1. BV signifie Bed Volume ou volume du lit. Si on collecte la fraction de 0,32 à 0,42 BV, 75 % du sialylactose entrant est récupéré, et la pureté du sialyllactose passe de 0,15 % sur matière sèche à une pureté de 0,62 % sur matière sèche. Le lactose se trouve principalement dans la fraction de 0,42 à 0,63 BV. Le tableau ci-dessous regroupe les valeurs (%ms étant % sur matière sèche).

| Fraction | Sialyllactose % ms | Lactose %ms | Reste %ms |
|---|---|---|---|
| 0.32 à 0.42 | 0.66 | 7.77 | 91.56 |
| 0.42 0 0.62 | 0.04 | 97.03 | 2.93 |

### Exemple 2. Chromatographie continue.

On utilise un pilote composé de 6 colonnes de dimension identiques à celle de l'exemple 1, fonctionnant suivant un procédé continu de type SSMB (sequential Simulated Moving Bed). La température est maintenue à 60°C. Le lactosérum est concentré à 20 % de matière sèche et filtré. On récupère ainsi un extrait et un raffinat. L'extrait contient le matériau le plus retenu sur la résine, tandis que le raffinat contient le produit le moins retenu. Le sialyllactose se retrouve dans le raffinat. Le profil de concentration interne est donné à la figure 2. Le tableau ci-dessous regroupe les valeurs (%ms étant % sur matière sèche)

| Fraction | Sialyllactose % ms | Lactose %ms | Reste %ms |
|---|---|---|---|
| Raffinat | 1,18 | 41,93 | 56,89 |
| Extrait | 0.01 | 93,71 | 6,28 |

Le procédé continu permet une séparation efficace entre le sialyllactose et le lactose, la pureté du sialyllactose atteint 1,18 % et le rendement de récupération 98 %.

### Exemple 3. Installation avec séparation des ions.

On met en oeuvre l'installation décrite à la figure 3. Le lactoserum qui est le flux d'alimentation des résines échangeuses d'ions comprend une teneur en ms de 6 %, dont 80,56 % de lactose et 0,30 % de sialyllactose. Après échange ionique, le profil du flux n'est pas sensiblement modifié, si ce n'est que la teneur en lactose est alors de 80,16 %. Après nanofiltration, le rétentatest un flux comprenant alors 24 % de ms, dont 90,45 % de lactose et 0,32 % de sialyllactose. Cette solution est traitée dans une installation de SSMB (disponible chez Applexion, Epone, France). La résine utilisée est une résine du type Diaion UBK 550, Diaion UBK530, Dowex 99/310, 99/320, 99/350, Lanxess MDS 1368, Rohm&Haas CR1320 ou encore Rohm&Haas CR1310. On utilise de l'eau de procédé comme éluant. Pour un débit de solution à traiter de 201/h, on utilise un débit d'eau d'environ 851/h. L'extrait (env. 451/h) contient alors 10,06 % de ms dont 99,22 % de lactose et 0,02 % de sialyllactose, tandis que le raffinat (env. 601/h) contient alors 0,93 % de ms, dont 16,97 % de lactose et 2,88 % de sialyllactose.

## Revendications

1. Procédé de purification de sialyllactose par chromatographie d'exclusion ionique d'une solution contenant le sialyllactose sur une résine cationique forte sous forme majoritaire monovalente, Na ou K, et obtention d'un raffinat enrichi en sialyllactose, le procédé comprenant une étape préalable de séparation de tout ou partie du phosphate de calcium.

2. Procédé selon la revendication 1, **caractérisé en ce que** la résine est une résine du type polystyrène divinylbenzène sulfonée.

3. Procédé selon la revendication 1 ou 2, **caractérisé en ce que** la température est comprise entre 0 et 80°C.

4. Procédé selon l'une des revendications 1 à 3, **caractérisé en ce qu'**il comprend une étape préalable de substitution des ions divalents par des ions monovalents, en particulier substitution des ions calcium par des ions sodium ou potassium.

5. Procédé selon l'une des revendications 1 à 4, **caractérisé en ce qu'**il comprend une étape préalable de nanofiltration.

6. Procédé selon l'une des revendications 1 à 5, **caractérisé en ce qu'**il comprend une étape ultérieure de concentration du raffinat ainsi obtenu.

7. Procédé selon l'une des revendications 1 à 6, **caractérisé en ce que** la solution contenant le sialyllactose est du lactosérum, du perméat de lactosérum, du lait, des eaux-mères de cristallisation de lactose.

8. Procédé selon l'une des revendications 1 à 7, **caractérisé en ce qu'**il comprend une étape préalable de séparation des protéines de la solution contenant le sialyllactose, notamment par ultrafiltration.

9. Procédé selon l'une des revendications 1 à 8, **caractérisé en ce qu'**il est mis en oeuvre de façon continue multi-colonnes.

10. Procédé selon l'une des revendications 1 à 9, **caractérisé en ce qu'**il comprend une étape de substitution des ions divalents par des ions monovalents puis une étape de concentration par nanofiltration, l'étape de chromatographie d'exclusion ionique et une étape de concentration sur membranes du raffinat.

11. Procédé d'enrichissement de laits maternisés par adjonction de sialyllactose comprenant la production de sialyllactose par le procédé selon l'une des revendications 1 à 10 et l'ajout du sialyllactose ainsi obtenu à un lait maternisé ou un précurseur de ce lait maternisé.

## Claims

1. A method for purifying sialyllactose by ion exclusion chromatography of a solution containing sialyllactose on a strong cationic resin in predominantly monovalent form, Na or K, and for obtaining a raffinate enriched in sialyllactose, the method comprising a preliminary step of separating the whole or part of the calcium phosphate.

2. The method according to claim 1, **characterized in that** the resin is a sulfonated polystyrene divinylbenzene type.

3. The method according to claim 1 or 2, **characterized in that** the temperature is comprised between 0 and 80°C.

4. The method according to any of claims 1 to 3, **characterized in that** it comprises a preliminary step for substituting divalent ions with monovalent ions, in particular substitution of calcium ions with sodium or potassium ions.

5. The method according to any of claims 1 to 4, **characterized in that** it comprises a preliminary nanofiltration step.

6. The method according to any of claims 1 to 5, **characterized in that** it comprises a subsequent step for concentrating the thereby obtained raffinate.

7. The method according to any of claims 1 to 6, **characterized in that** the solution containing sialyllactose is lactoserum, lactoserum permeate, milk, lactose crystallization mother liquors.

8. The method according to any of claims 1 to 7, **characterized in that** it comprises a preliminary step for separating proteins from the solution containing sialyllactose, notably by ultrafiltration.

9. The method according to any of claims 1 to 8, **characterized in that** it is applied continuously with multiple columns.

10. The method according to any of claims 1 to 9, **characterized in that** it comprises a step for substituting divalent ions with monovalent ions and then a concentration step by nanofiltration, the ion exclusion chromatographic step and a step for concentrating the raffinate on membranes.

11. A method for enriching humanized milks by adding sialyllactose comprising the production of sialyllactose by the method according to any of claims 1 to 10 and addition of the thereby obtained sialyllactose to a humanized milk or a precursor of this humanized milk.

## Patentansprüche

1. Verfahren zur Aufreinigung von Sialyllaktose durch Ionenausschlusschromatographie einer Lösung, die die Sialyllaktose enthält, auf einem starken kationischen Harz in vorwiegend einwertiger Form, Na oder K, und Erhalten eines mit Sialyllaktose angereicherten Raffinat, wobei das Verfahren einen vorherigen Schritt der Trennung des gesamten oder eines Teils des Calciumphosphats umfasst.

2. Verfahren nach Anspruch 1, **dadurch gekennzeichnet, dass** es sich bei dem Harz um ein Harz vom sulfonierten Divinylbenzol-Polystyrol-Typ handelt.

3. Verfahren nach Anspruch 1 oder 2, **dadurch gekennzeichnet, dass** die Temperatur zwischen 0 und 80 °C liegt.

4. Verfahren nach einem der Ansprüche 1 bis 3, **dadurch gekennzeichnet, dass** es einen vorherigen Schritt der Substitution von zweiwertigen Ionen durch einwertige Ionen, insbesondere der Substitution von Calciumionen durch Natrium- oder Kaliumionen umfasst.

5. Verfahren nach einem der Ansprüche 1 bis 4, **dadurch gekennzeichnet, dass** es einen vorherigen Nanofiltrationsschritt umfasst.

6. Verfahren nach einem der Ansprüche 1 bis 5, **dadurch gekennzeichnet, dass** es einen späteren Schritt der Konzentration des so erhaltenen Raffinats umfasst.

7. Verfahren nach einem der Ansprüche 1 bis 6, **dadurch gekennzeichnet, dass** es sich bei der Lösung, die die Sialyllaktose enthält, um Laktoserum, Laktoserumpermeat, Milch oder Kristallisationsmutterlaugen von Laktose handelt.

8. Verfahren nach einem der Ansprüche 1 bis 7, **dadurch gekennzeichnet, dass** es einen vorherigen Schritt der Trennung von Proteinen der Lösung, die die Sialyllaktose enthält, insbesondere durch Ultrafiltration umfasst.

9. Verfahren nach einem der Ansprüche 1 bis 8, **dadurch gekennzeichnet, dass** es kontinuierlich auf mehreren Säulen durchgeführt wird.

10. Verfahren nach einem der Ansprüche 1 bis 9, **dadurch gekennzeichnet, dass** es einen Schritt der Substitution von zweiwertigen Ionen durch einwertige Ionen, dann einen Konzentrationsschritt durch Nanofiltration, den Ionenausschlusschromatographieschritt und einen Schritt der Konzentration des Raffinats auf Membranen umfasst.

11. Verfahren zur Anreicherung von Säuglingsmilch durch Hinzufügen von Sialyllaktose, das die Herstellung von Sialyllaktose mit dem Verfahren nach einem der Ansprüche 1 bis 10 und die Zugabe der so erhaltenen Sialyllaktose zu einer Säuglingsmilch oder einem Vorläuferstoff dieser Säuglingsmilch umfasst.
